# EUROPÄISCHE PATENTSCHRIFT

(11) **EP 2 021 750 B1**
(45) Veröffentlichungstag und Bekanntmachung des Hinweises auf die Patenterteilung: **23.02.2011**
(21) Anmeldenummer: 07728895.9
(22) Anmeldetag: 08.05.2007
(51) Int. Cl.: G01K 3/00, G01K 13/10, B65D 88/74, B65D 90/22, G05D 23/00

(54) **VERHINDERUNG EINES UNZULÄSSIGEN TEMPERATURANSTIEGES EINES LAGERSILOS**
PREVENTION OF AN EXCESSIVE TEMPERATURE RISE IN A STORAGE SILO
PRÉVENTION D'UNE AUGMENTATION DE TEMPÉRATURE EXCESSIVE POUR UNE MATIÈRE REMPLISSANT UN SILO DE STOCKAGE

(30) Priorität: 08.05.2006 DE 102006022033
(43) Veröffentlichungstag der Anmeldung: 11.02.2009
(73) Patentinhaber: Rödiger, Lorenz, 21271 Hanstedt (DE)
(72) Erfinder: Rödiger, Lorenz, 21271 Hanstedt (DE)
(74) Vertreter: Gulde Hengelhaupt Ziebig & Schneider
(86) Internationale Anmeldenummer: PCT/EP2007/054442
(87) Internationale Veröffentlichungsnummer: WO 2007/128816

(56) Entgegenhaltungen:
- JP-A- 59 203 932

## Beschreibung

Die Erfindung bezieht sich auf ein Verfahren, eine Vorrichtung und ein Mittel zur Verhinderung eines unzulässigen Temperaturanstieges einer überwiegend aus Ammoniumnitrat bestehenden Füllung eines Lagersilos.

Eine häufig als Hauptbestandteil von Sicherheitssprengstoffen eingesetzte Komponente ist Ammoniumnitrat. Sicherheitssprengstoffe werden z. B. in Steinbrüchen, Kohlegruben und beim Steinsalzabbau verwendet. Diese Sprengstoffe sollen nicht nur gefahrlos handhabbar sein, sondern auch eine vorgegebene Brisanz aufweisen. Bei den genannten Aufgaben kommt es darauf an, große Stücke heraus zu brechen, ohne dass eine Zertrümmerung zu Feinstaub erfolgt.

Die Eigenschaften der Sicherheitssprengstoffe sollen sich weder während des Lagerns bei unterschiedlichen Temperaturbedingungen noch durch Druckwellen benachbarter Sprengungen in ihren Eigenschaften ändern.

In den meisten Fällen werden daher Ammoniumnitratprills mit vorgegebenen Eigenschaften gefordert und eingesetzt. In erster Näherung erfolgt die Herstellung der Prills in der Art, dass eine Schmelze von Ammoniumnitrat mit ca. 4 % Wasser am Kopf eines Prillturmes eingedüst wird. Die Schmelze besitzt eine Temperatur von 130 bis 160 °C und wird durch Düsen mit einer lichten Weite von 0,5 bis 1,5 mm eingetragen. Auf dem Fallweg kühlt die Schmelze auf ca. 60 °C ab und erstarrt. Gegebenenfalls erfolgt eine Nachtrocknung.

Für die Verwendung der Ammoniumnitratprills in so genannten ANFO-Sprengstoffen (**A**mmonium **N**itrate **F**uel **O**il) muss das Ammoniumnitrat eine hohe Porosität zur Aufnahme der Sprengölkomponente von 6 bis 8 Teilen Öl auf 100 Teilen Ammoniumnitrat bei ausreichender Festigkeit und eine gleichmäßige Korngrößenverteilung aufweisen. Als Messgröße für diese Eigenschaften dient vielfach das Schüttgewicht.
Um das genannte Ziel zu erreichen, werden der Ammoniumnitratschmelze vor dem Eindüsen in den Prillturm Zusätze beigemischt, die eine Senkung des Schmelzpunktes, der Viskosität und der Oberflächenspannung bedingen. Hierbei handelt es sich hauptsächlich um organische grenzflächenaktive Stoffe, die jedoch in so geringer Konzentration (ca. 0,1 %) vorhanden sind, dass keine Explosionsgefahr daraus resultiert. Jedoch ist bekannt, dass auch höhere Konzentrationen an Zusatzstoffen und undefinierten Verbindungen angewendet werden.

Typische Verhältnisse bei der Herstellung von Ammoniumnitratprills werden in der britischen Patentschrift GB 1462491 beschrieben. Insbesondere wird darauf verwiesen, dass im Feinstaub des Abriebs organische Zusatzstoffe erheblich angereichert sind. Das kann bei Transport und Lagerung durch Ablagerungen und Anbackungen zu Mischungsverhältnissen von Ammoniumnitrat und organischem Material führen, die bereits exotherm reagieren können.

Die Lagerung der Ammoniumnitratprills erfolgt in der Regel in großen Silos, aus denen dann die weiter zu transportierenden Mengen abgefüllt werden. Trotz aller Vorsichtsmaßnahmen zur ungefährlichen, auch längeren Lagerung von Ammoniumnitrat in diesen Silos, können durch ein Zusammentreffen unglücklicher Umstände oder durch menschliches Versagen Gefahrensituationen auftreten. So wird durch eine Reaktion des Oxidationsmittels Ammoniumnitrat mit Zusätzen oder Verunreinigungen eine langsame chemische Reaktion in Gang gesetzt, die z.B. durch Wärmestau zu einer Temperatursteigerung führt, die sich zu einer unmittelbaren Gefahr entwickeln kann. Nach einer Faustregel verdoppelt sich die Umsatzgeschwindigkeit je 10 Grad Temperaturerhöhung. Das bedeutet z.B. bei einem Temperaturanstieg von 25°C auf 65°C eine Beschleunigung um den Faktor 16. Ein schneller Temperaturanstieg würde aufgrund einer Zersetzung des Ammoniumnitrats in Wasser, Stickstoff und Sauerstoff (2 NH₄NO₃ → 4 H₂O + 2N₂ + O₂) zu einer schwerwiegenden Explosion mit den aus der Geschichte bekannten katastrophalen Folgen führen. Die bisher bekannten Lagersilos sind jedoch für diesen Fall nicht ausreichend gesichert. Üblich ist es bisher, dass bei einer beobachteten Temperaturerhöhung in der Füllung des Silos der Inhalt geleert wird und dadurch eine Abkühlung erreicht wird. Allerdings besteht hier die Gefahr, dass bereits ein Verbacken der Ammoniumnitratprills eingetreten sein könnte und deshalb ein notwendiges schnelles Entleeren des Lagersilos behindert wird oder sogar nicht mehr möglich ist. Patentschrift JP59203932 beschreibt ein Silo für die Lagerung von kohle. Werden abnormale temperaturen im Silo festgestellt, gibt man Wasser in unkontrollierter Menge und Inertgas in das Silo.

Der Erfindung liegt deshalb die Aufgabe zugrunde, zu erreichen, dass beim Überschreiten eines vorgegebenen Temperaturlimits im Lagersilo die Temperatur im Silo schnell unter Zuführung eines geeigneten Mittels abgesenkt wird.

Gemäß des erfindungsgemäßen Gedankens erfolgt die Lösung der Aufgabe mittels eines Verfahrens zur Verhinderung eines unzulässigen Temperaturanstieges einer überwiegend aus Ammoniumnitrat bestehenden Füllung eines Lagersilos, das dadurch gekennzeichnet ist, dass im Silo zur Ermittlung der Temperaturverteilung die Temperatur kontinuierlich überwacht und beim Überschreiten eines Temperaturgrenzwertes in der Füllung des Silos die Zugabe eines flüssigen Mittels zur Temperaturerniedrigung in oder auf die Füllung des Silos ausgelöst wird.

Darüber hinaus erfolgt die Lösung der Aufgabe mit einer Vorrichtung zur Verhinderung eines unzulässigen Temperaturanstieges einer überwiegend aus Ammoniumnitrat bestehenden Füllung eines Silos, die zur Erfassung der Temperatur der Füllung im Silo angeordnete Temperatursensoren, einen außerhalb des Silos angeordneten Löschwassertank, wobei der Löschwassertank über eine Löschwasserleitung mit dem Silo verbunden ist, und eine Löschwasserfördereinrichtung umfasst.

Weiterhin wird die Aufgabe erfindungsgemäß mit einem Mittel zur Verhinderung eines unzulässigen Temperaturanstieges einer überwiegend aus Ammoniumnitrat bestehenden Füllung eines Silos gelöst, das durch eine wässrige Lösung von anorganischen Salzen und/oder Harnstoff gekennzeichnet ist.

So ist erfindungsgemaß das Verfahren dadurch gekennzeichnet, dass Wasser oder eine wässrige Lösung auf oder in die Füllung gebracht werden.

erfindungsgemäß werden Wasser oder eine wässrige Lösung im Bereich von 8 bis 12 Gewichtsteilen auf 100 Gewichtsteile Ammoniumnitrat zugegeben.

Vorteilhafte Weiterbildungen der Erfindung sind in den Unteransprüchen angegeben.

In einer Weiterbildung der Erfindung wird im Wasser und in der wässrigen Lösung ein pH-Wert zwischen 4 und 7 eingestellt.

In einer Weiterbildung der Erfindung wird eine wässrige Lösung verwendet, die anorganische Salze oder Harnstoff enthält.

In einer Weiterbildung der Erfindung wird eine wässrige Lösung verwendet, die aus einer 45%igen Harnstofflösung besteht.

In einer Weiterbildung der Erfindung wird eine wässrige Lösung verwendet, die 30% Harnstoff und 10% Ammoniumchlorid enthält.

In einer Weiterbildung der Erfindung wird eine wässrige Lösung verwendet wird, die 45% Calciumnitrat enthält.

In einer Weiterbildung der Erfindung wird das Wasser oder die wässrige Lösung in einem Vorratsbehälter aufbewahrt und von dort nach Bedarf zu einem Silokopf gefördert und von dort in die Füllung gegeben.

Eine weitere Ausgestaltung sieht vor, dass die Förderung in das Silo mittels einer Pumpe und/oder eines Inertdruckgases wie Stickstoff, Kohlendioxid oder Edelgas erfolgt.

die Erfindungsgemaß die ist Vorrichtung dadurch gekennzeichnet, dass ein Leitungsteil der Löschwasserleitung mit einem Silokopf des Silos verbunden ist.

In einer weiteren Ausgestaltung ist die Löschwasserleitung oberhalb einer Befüllung mit einer Förderleitung des Silos verbunden.

Eine weitere Ausgestaltung ist dadurch gekennzeichnet, dass die Löschwasserfördereinrichtung eine elektrische Pumpe umfasst.

Eine weitere Ausgestaltung sieht vor, dass die Löschwasserfördereinrichtung als Inertgasdruckförderung ausgebildet ist.

In einer weiteren Ausgestaltung umfasst die Inertgasdruckförderung eine Inertgasbevorratungseinheit und Gasleitungen.

In einer weiteren Ausgestaltung umfasst die Inertgasbevorratungseinheit einen Flüssiggastank (18) und einen Verdampfer, wobei die Gasleitung vom Verdampfer ausgehend mit dem Flüssiggastank verbunden ist.

Eine vorteilhafte Weiterbildung ist dadurch gekennzeichnet, dass der Flüssiggastank flüssigen Stickstoff enthält.

Eine Ausgestaltung des Mittels ist dadurch gekennzeichnet, dass als anorganische Salze Kalziumnitrat und/öder Alkalimetallchloride und/oder Ammoniumchlorid enthalten sind.

In einer weiteren Ausgestaltung ist in der wässrigen Lösung 45% Harnstoff enthalten.

In einer weiteren Ausgestaltung enthält die wässrige Lösung 30% Harnstoff und 10% Ammoniumchlorid.

Eine weitere Ausgestaltung ist dadurch gekennzeichnet, dass die wässrige Lösung 45% Kalziumnitrat enthält.

Der erfindungsgemäße Gedanke ist besonders wertvoll für die Anwendung bei Silotürmen. Wenn sich durch eine Steigerung der Temperatur erweist, dass eine chemische Reaktion abläuft, so kann das auch zu einer Verfestigung der Schüttung führen. Ein notwendiges schnelles mechanisches Entleeren des Silos wäre nicht mehr möglich.

Die Durchlässigkeit der Schüttung für Wasser und wässrige Lösungen bleibt jedoch vorteilhafterweise erhalten.

Ursächlich für die überraschend sichere Wirkung ist die Zugabe von Wasser oder wässriger Lösung zur augenblicklichen Absenkung der Temperatur. Die Nutzung dieser Eigenschaft ist ein wesentlicher Teil der Erfindung. Dabei kommt es nicht zur Lösung der gesamten Füllmenge, sondern nur zu einem Anlösen an der Kristalloberfläche.

Die Messung der Temperatur des Siloinhaltes erfolgt in üblicher Weise mit Temperatursensoren, die bei eingestellter Temperatur einen elektrischen Impuls auszulösen vermögen. Damit können Signale erzeugt werden, die ein rechtzeitiges Eingreifen bei einer ungewöhnlichen Änderung der Temperatur ermöglichen. Wenn von Seiten des Bedienpersonals kein erfolgreiches Eingreifen erfolgt, so wird bei einer für die jeweilige Schüttung als kritisch angesehenen Temperatur automatisch eine auf den Inhalt abgestimmte Wassermenge am Silokopf zugeführt.

Um die schnelle Zugabe zu sichern, wird das Wasser oder eine wässrige Lösung mittels eines Gasdruckpolsters zum Silokopf geführt.

Die Erfindung wird anhand von Ausführungsbeispielen näher erläutert.

### Beispiel 1

In Laborversuchen wurde die Absenkung der Temperatur bei Zugabe unterschiedlicher Anteile von Wasser und anderen wässrigen Lösungen untersucht. Dazu wurden jeweils 100 g vorgewärmte Ammoniumnitratprills in einem Dewargefäß mit unterschiedlichen Anteilen von Wasser und anderen wässrigen Lösungen versetzt und die Änderung der Temperatur gemessen. Für die Auswertung der Ergebnisse wurde der so genannte Wasserwert gesondert bestimmt und berücksichtigt. Als Wasserwert bezeichnet man diejenige Energiemenge, die zur Abkühlung von Gefäßwand und Temperaturfühler notwendig ist, und daher für das Ammoniumnitrat nicht zur Verfügung steht. In einem Lagersilo kann dieser Wert wegen des günstigeren Verhältnisses von Masse der Füllung zur Wärmekapazität der Behälterwandung vernachlässigt werden.

Die Versuche wurden sowohl mit Wasser wie auch mit 3 kältestabilen wässrigen Lösungen durchgeführt, die die Sicherheit des Verfahrens bei Temperaturen unter 0°C erhöhen.

**Tabelle 1**

| Temperatur von Ammoniumnitratprills, vorgewärmt auf 55°C, bei Zugabe von Wasser bzw. wässrigen Lösungen mit einer Temperatur von 25°C. | | | | |
|---|---|---|---|---|
| Zeitdauer [min] | Wasser [°C] | Harnstoff-Lösung [°C] | 30 % Harnstoff, 10 % Ammoniumchlorid [°C] | Calciumnitrat-Lösung [°C] |
| 0 | 55 | 55 | 55 | 55 |
| 1 | 9 | 25 | 26 | 27 |

In der Tabelle sind die Werte bei einer optimalen Zugabe von Wasser bzw. wässrigen Lösungen aufgeführt. Bei Wasser wurde die maximale Absenkung der Temperatur bei einer Zugabe von 9,5 Gewichtsteilen Wasser auf 100 Gewichtsteile Ammoniumnitrat beobachtet.
Aufgrund der höheren Dichte der wässrigen Lösungen betrug dort das optimale Verhältnis 11 Gewichtsteile Lösung auf 100 Gewichtsteile Ammoniumnitrat. Abweichungen von diesen Verhältnissen im Bereich 8: 100 bis 12: 100 veränderten die Absenkung der Temperatur um 2...3°C.

### Beispiel 2

In ein mit 10 t Ammoniumnitrat gefülltes Hochsilo wurde nach einer Verfestigung (Backen) des Inhalts, das zu einer Brückenbildung beim Entleeren führte, 1 m³ Wasser gegeben. Es erfolgte eine spontane Abkühlung von ca. 25°C auf -10°C. Der entstehende Kristallbrei konnte problemlos und rückstandsfrei entleert und einer Verwendung in der Produktion von Düngemitteln zugeführt werden.

Darüber hinaus wird die erfindungsgemäße Vorrichtung anhand einer Zeichnung näher erläutert.

Es zeigen
- Fig. 1: eine perspektivische Darstellung der Vorrich- tung und
- Fig. 2: ein Fließschema der erfindungsgemäßen Vor- richtung.

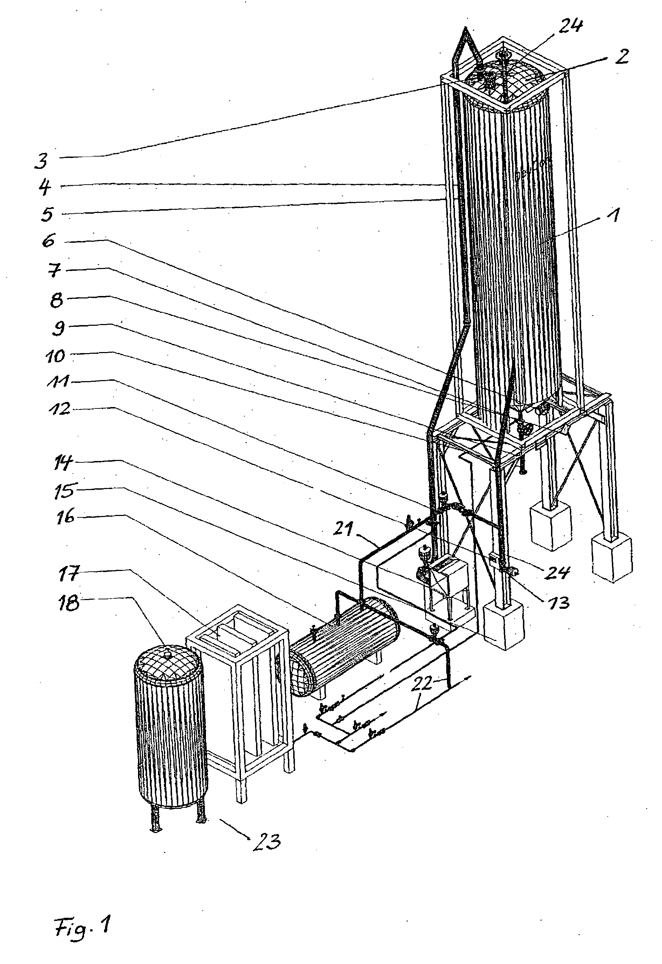

Fig. 1 zeigt in einer schematischen perspektivischen Darstellung die erfindungsgemäße Vorrichtung. Ein Silo 1 ist mittels eines Stahlbaurahmens 11, der mit Fundamenten 15 im Boden verankert ist, in vertikaler Position gehaltert. An einem Silokopf 2 des Silos 1 befindet sich der Eingang einer Förderleitung 24 und der Ausgang einer Entstaubungsleitung 4. Des Weiteren ist auf dem Silokopf 2 ein Über- und Unterdruckventil 3 installiert. Das Silo 1 besitzt eine Isolierung 5, die die Füllung vor starken Temperaturschwankungen schützt. Die Förderleitung 24 ist entlang des Silos 1 geführt und weist im unteren Bereich eine Befüllung 13 auf, durch die die ammoniumnitrathaltige Füllung in das Silo 1 transportiert wird. Der bei der Förderung in das Silo 1 hinein möglicherweise entstehende Staub wird über die ebenfalls am Silo 1 senkrecht nach unten geführte Entstaubungsleitung 4, die in einen Filter 14 mündet, entsorgt. Unterhalb des Silos 1 ist eine Entleerung 10 angeordnet, die über einen Schieber 7 geöffnet oder geschlossen wird. Der ebenfalls im unteren Bereich angeordnete Rüttler 6 dient zur vollständigen Entleerung des Silos, sollte es einmal zu geringen Anhaftungen an den Silowänden kommen. Wägezellen 9, die an der Auflage des Silos 1 auf dem Stahlbaurahmen 11 installiert sind, erlauben es, den jeweiligen Füllungszustand des Silos 1 festzustellen. Ein Elektroschaltschrank 12 enthält die Steuerungstechnik und ermöglicht die Bedienung der Gesamtanlage. Eine von der Förderleitung 24 abgehende Löschwasserleitung 21 ist mit einem Löschwassertank 16 verbunden. Eine Gasleitung 22 mündet ebenfalls im Löschwassertank 16. Die Gasleitung 22 ist mit einer Inertgasbevorratungseinheit 23 verbunden. Die Inertgasbevorratungseinheit 23 umfasst einen Verdampfer 17 und einen Inertgastank 18. In einer bevorzugten Ausgestaltung der Erfindung enthält der Inertgastank 18 verflüssigten Stickstoff, der im Verdampfer 17 in einem unter Druck befindlichen gasförmigen Zustand überführt wird. Der gasförmige kalte Stickstoff kann dann über die Gasleitung 22 dem Löschwassertank 16 zugeführt werden. Dadurch wird der Löschwassertank 16 mit einem Gasdruck beaufschlagt, der es im Gefahrenfall ermöglicht, wenn z.B. die Füllung im Silo 1 einen bestimmten Temperaturgrenzwert überschreitet, das Löschwasser in das Silo 1 zu drücken.

Die am Stahlbaurahmen 11 befestigten Warnschilder 8 weisen auf die generelle Gefahrenzone und auf den Gefahrstoff hin.

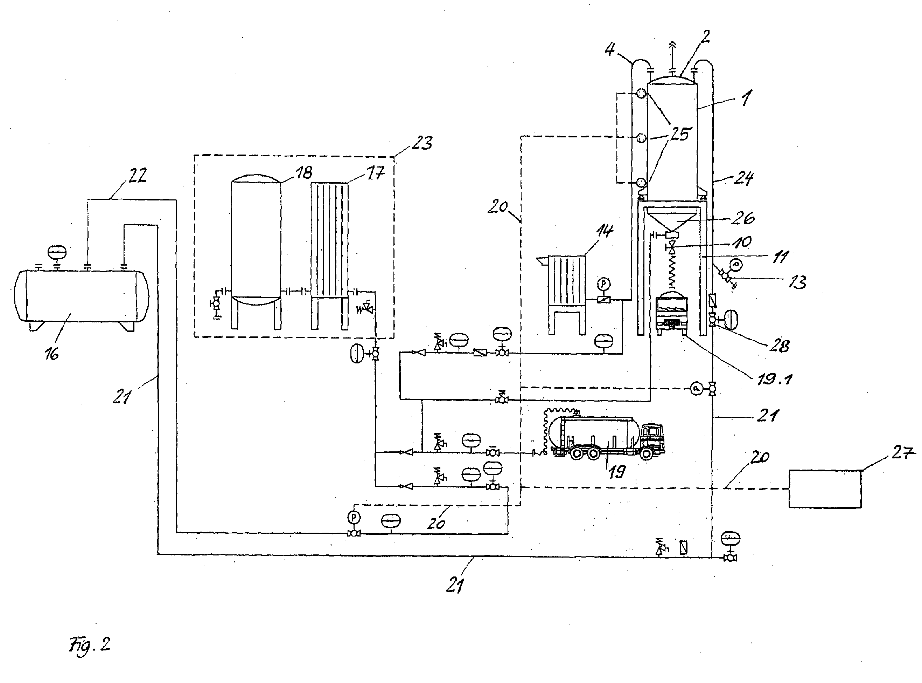

In Fig. 2 ist eine beispielhafte Ausführung eines Fließschemas der erfindungsgemäßen Vorrichtung dargestellt.
Beim Lagern einer ammoniumnitrathaltigen Füllung im Silo 1 können durch ein Zusammentreffen unglücklicher Umstände oder auch durch menschliches Versagen Gefahrensituationen auftreten. So wird durch eine Reaktion des Oxydationsmittels Ammoniumnitrat mit Zusätzen oder Verunreinigungen eine langsame chemische Reaktion in Gang gesetzt, die z.B. durch Wärmestau zu einer Temperatursteigerung führt, die sich zu einer unmittelbaren Gefahr entwickeln kann. Die Temperaturentwicklung wird mit Temperatursensoren 25, die schematisch am Silo 1 dargestellt sind, erfasst und einer Steuereinheit 27 zugeführt, die im Gefahrenfalle einen Löschvorgang auslöst. Diese Gefahrensituation kann beispielsweise entstehen, wenn zwei der drei Temperatursensoren 25 einen Wert feststellen, der über einen Zeitraum von 60 Sekunden 85°C dauernd überschreitet. Die Steuereinheit 27 veranlasst in diesem Falle, dass aus der verflüssigten Stickstoff enthaltenden Inertgasbevorratungseinheit 23 gasförmiger Stickstoff über eine Gasleitung 22 den Löschwassertank 16 mit einem Druck von ca. 4 bar beaufschlagt. Der Löschwassertank 16 enthält erfindungsgemäß ein wässriges Mittel, das geeignet ist, die ammoniumnitrathaltige Füllung abzukühlen. Über eine zweite hier nicht näher dargestellte Regelstrecke werden die im Einzelnen auch nicht näher bezeichneten pneumatisch angetriebenen Kugelhähne angesteuert und geöffnet, so dass das Löschwasser durch die Löschwasserleitung 21 und die Förderleitung 24, die beide über ein Kugelventil 28 verbunden sind, vom Silokopf 2 auf die ammoniumnitrathaltige Füllung gegeben wird. Die Gefahrensituation wird dadurch augenblicklich beseitigt. Gegebenenfalls kann dieser Löschvorgang auch manuell an der Anlage eingeleitet werden, wenn äußere Einflüsse, z.B. Feuer, dies erforderlich machen. Der hierbei entstehende ammoniumnitrathaltige Kristallbrei kann dann rückstandsfrei entleert und einer weiteren Verwendung, beispielsweise in der Produktion von Düngemitteln, zugeführt werden. Vollständigkeitshalber sind im Fließschema die Silofahrzeuge 19 für die Füllung des Silos 1 und 19.1 für die Entleerung des Silos 1 dargestellt.

### Bezugszeichenliste

- 1: Silo
- 2: Silokopf
- 3: Über- und Unterdruckventil
- 4: Entstaubungsleitung
- 5: Isolierung
- 6: Rüttler
- 7: Schieber
- 8: Warnschild
- 9: Wägezelle
- 10: Entleerung
- 11: Stahlbaurahmen
- 12: Elektroschaltschrank
- 13: Befüllung
- 14: Filter
- 15: Fundament
- 16: Löschwassertank
- 17: Verdampfer
- 18: Stickstofftank
- 19: Silofahrzeug
- 19.1: Silofahrzeug
- 20: Steuerleitung
- 21: Löschwasserleitung
- 21.1: Leitungsteil
- 22: Gasleitung
- 23: Inertgasbevorratungseinheit
- 24: Förderleitung
- 25: Temperatursensor
- 26: Abfüllkonus
- 27: Steuereinheit
- 28: Kugelventil

## Patentansprüche

1. Verfahren zur Verhinderung eines unzulässigen Temperaturanstieges einer Füllung eines Lagersilos, wobei im Silo die Temperatur kontinuierlich überwacht und beim Überschreiten eines Temperaturgrenzwertes in der Füllung des Silos die Zugabe eines wässrigen Mittels zur Temperaturerniedrigung in oder auf die Füllung des Silos ausgelöst wird,
**dadurch gekennzeichnet, dass**
die Füllung Ammoniumnitrat ist und 8 bis 12 Gewichtsteile Wasser oder einer wässrigen Lösung bezogen auf 100 Gewichtsteile der Füllung auf oder in die Füllung gebracht werden.

2. Verfahren nach Anspruch 1,
**dadurch gekennzeichnet, dass**
im Wasser und in der wässrigen Lösung ein pH-Wert zwischen 4 und 7 eingestellt wird.

3. Verfahren nach einem der Ansprüche 1 oder 2,
**dadurch gekennzeichnet, dass**
eine wässrige Lösung verwendet wird, die anorganische Salze oder Harnstoff enthält.

4. Verfahren nach einem der Ansprüche 1 bis 3,
**dadurch gekennzeichnet, dass**
eine wässrige Lösung verwendet wird, die 30% Harnstoff und 10% Ammoniumchlorid enthält.

5. Verfahren nach einem der Ansprüche 1 bis 4,
**dadurch gekennzeichnet, dass**
eine wässrige Lösung verwendet wird, die 45% Calciumnitrat enthält.

6. Verfahren nach einem der Ansprüche 1 bis 5,
**dadurch gekennzeichnet, dass**
das Wasser oder die wässrige Lösung in einem Löschwassertank aufbewahrt wird und von dort nach Bedarf zu einem Silokopf gefördert und von dort in die Füllung gegeben wird.

7. Verfahren nach einem der Ansprüche 1 bis 6,
**dadurch gekennzeichnet, dass**
die Förderung in das Silo mittels einer Pumpe und/oder eines Inertdruckgases wie Stickstoff, Kohlendioxid oder Edelgas erfolgt.

8. Verfahren nach Anspruche 7,
**dadurch gekennzeichnet, dass**
das Inertdruckgas aus verflüssigten Gasen erzeugt wird.

9. Vorrichtung zur Verhinderung eines unzulässigen Temperaturanstieges einer überwiegend aus Ammoniumnitrat bestehenden Füllung eines Silos (1) für ein Verfahren nach einem der Ansprüche 1 bis 8, wobei die vorrichtung
zur Erfassung der Temperatur der Füllung im Silo (1) angeordnete Temperatursensoren (25), Mittel zur Überwachung des Überschreitens eines Temperaturgrenzwertes,
einen mit einem mit dem Silo über eine Löschwasserleitung verbundenen, außerhalb des Silos (1) angeordneten Löschwassertank (16), Mittel zur Auslösung der Zugabe eines wässrigen Mittels bei Feststellung der Überschreitung des Temperaturgrenzwertes,
und eine Löschwasserfördereinrichtung umfasst, **dadurch gekennzeichnet dass** die Füllung Ammoniumnitrat ist und die Füllung nach Zugabe des besagten wässrigen Mittels zur Temperatureniedrigung aus Ammoniumnitrat und 8 bis 12 Gewichtsteile Wasser oder einer wässrigen Lösung bezogen auf 100 Gewichtsteile der Ammoniumnitratfüllung besteht.

10. Vorrichtung nach Anspruch 9,
**dadurch gekennzeichnet, dass**
die Löschwasserfördereinrichtung als Inertgasdruckförderung ausgebildet ist.

11. Vorrichtung nach einem der Ansprüche 9 oder 10,
**dadurch gekennzeichnet, dass**
die Inertgasdruckförderung eine Inertgasbevorratungseinheit (23) und Gasleitungen (22) umfasst.

12. Vorrichtung nach einem der Ansprüche 9 bis 11,
**dadurch gekennzeichnet, dass**
die Inertgasbevorratungseinheit (23) einen Flüssiggastank (18) und einen Verdampfer (17) umfasst, wobei die Gasleitung (22) vom Verdampfer (17) ausgehend mit dem Flüssiggastank (18) verbunden ist.

13. Vorrichtung nach einem der Ansprüche 9 bis 12,
**dadurch gekennzeichnet, dass**
der Flüssiggastank (18) flüssigen Stickstoff enthält.

## Claims

1. Method for the prevention of an inadmissible temperature rise in a burden of a storage silo, the temperature being continuously monitored in the silo, and, when a temperature limit value is overshot in the burden of the silo, the addition of an aqueous agent for lowering the temperature into or onto the burden of the silo being triggered, **characterized in that** the burden is ammonium nitrate, and 8 to 12 parts by weight of water or of an aqueous solution in relation to 100 parts by weight of the burden are applied onto or into the burden.

2. Method according to Claim 1, **characterized in that** a pH value of between 4 and 7 is set in the water and in the aqueous solution.

3. Method according to either one of Claims 1 and 2, **characterized in that** an aqueous solution containing inorganic salts or urea is used.

4. Method according to one of Claims 1 to 3, **characterized in that** an aqueous solution containing 30% urea and 10% ammonium chloride is used.

5. Method according to one of Claims 1 to 4, **characterized in that** an aqueous solution containing 45% calcium nitrate is used.

6. Method according to one of Claims 1 to 5, **characterized in that** the water or aqueous solution is stored in an extinguishing-water tank and is conveyed from there, as required, to a silo head and introduced from there into the burden.

7. Method according to one of Claims 1 to 6, **characterized in that** conveyance into the silo takes place by means of a pump and/or an inert compressed gas, such as nitrogen, carbon dioxide or noble gas.

8. Method according to Claim 7, **characterized in that** the inert compressed gas is generated from liquefied gases.

9. Device for the prevention of an inadmissible temperature rise in a burden, consisting predominantly of ammonium nitrate, of a silo (1) for a method according to one of Claims 1 to 8, the device comprising
temperature sensors (25) arranged for detecting the temperature of the burden in the silo (1),
means for monitoring the overshooting of a temperature limit value,
an extinguishing-water tank (16) connected to the silo via an extinguishing-water line and arranged outside the silo (1),
means for triggering the addition of an aqueous agent when the overshooting of the temperature limit value is established,
and an extinguishing-water conveying arrangement,
**characterized in that** the burden is ammonium nitrate, and, after the addition of the said aqueous agent for lowering the temperature, the burden consists of ammonium nitrate and 8 to 12 parts by weight of water or of an aqueous solution in relation to 100 parts by weight of the ammonium nitrate burden.

10. Device according to Claim 9, **characterized in that** the extinguishing-water conveying arrangement is in the form of an inert gas pressure conveyance.

11. Device according to either one of Claims 9 and 10, **characterized in that** the inert gas pressure conveyance comprises an inert-gas stock unit (23) and gas lines (22).

12. Device according to one of Claims 9 to 11, **characterized in that** the inert-gas stock unit (23) comprises a liquid-gas tank (18) and an evaporator (17), the gas line (22) which comes from the evaporator (17) being connected to the liquid-gas tank (18).

13. Device according to one of Claims 9 to 12, **characterized in that** the liquid-gas tank (18) contains liquid nitrogen.

## Revendications

1. Procédé pour empêcher une augmentation inadmissible de température d'une charge d'un silo de stockage, le silo surveillant en continu la température et, lors du dépassement d'une valeur limite de température dans la charge du silo, l'addition d'un agent aqueux dans ou sur la charge du silo en vue d'abaisser la température étant déclenchée, **caractérisé en ce que** la charge est du nitrate d'ammonium et que 8 à 12 parties en poids d'eau ou d'une solution aqueuse, par rapport à 100 parties en poids de la charge, sont introduites sur ou dans la charge.

2. Procédé selon la revendication 1, **caractérisé en ce qu'**on règle dans l'eau et la solution aqueuse un pH entre 4 et 7.

3. Procédé selon l'une quelconque des revendications 1 ou 2, **caractérisé en ce qu'**on utilise une solution aqueuse qui contient des sels inorganiques ou de l'urée.

4. Procédé selon l'une quelconque des revendications 1 à 3, **caractérisé en ce qu'**on utilise une solution aqueuse qui contient 30% d'urée et 10% de chlorure d'ammonium.

5. Procédé selon l'une quelconque des revendications 1 à 4, **caractérisé en ce qu'**on utilise une solution aqueuse qui contient 45% de nitrate de calcium.

6. Procédé selon l'une quelconque des revendications 1 à 5, **caractérisé en ce que** l'eau ou la solution aqueuse est conservée dans un réservoir d'eau d'extinction et est transportée à partir de celui-ci, en fonction des besoins, vers une tête de silo et introduite à partir de celle-ci dans la charge.

7. Procédé selon l'une quelconque des revendications 1 à 6, **caractérisé en ce que** le transport dans le silo est réalisé au moyen d'une pompe et/ou d'un gaz comprimé inerte, tel que l'azote, le dioxyde de carbone ou un gaz noble.

8. Procédé selon la revendication 7, **caractérisé en ce que** le gaz comprimé inerte est produit à partir de gaz liquéfiés.

9. Dispositif pour empêcher une augmentation inadmissible de température d'une charge, principalement constituée de nitrate d'ammonium, d'un silo (1) pour un procédé selon l'une quelconque des revendications 1 à 8, où le dispositif comprend des capteurs de température (25) pour enregistrer la température de la charge dans le silo (1), des moyens pour surveiller le dépassement d'une valeur limite de température, un réservoir d'eau d'extinction (16) raccordé au silo via une conduite pour eau d'extinction, disposé en dehors du silo (1), des moyens pour déclencher l'addition d'un agent aqueux lors de la constatation du dépassement de la valeur limite de température et un dispositif de transport d'eau d'extinction, **caractérisé en ce que** la charge est du nitrate d'ammonium et la charge, après l'addition dudit agent aqueux pour abaisser la température, est constituée de nitrate d'ammonium et de 8 à 12 parties en poids d'eau ou d'une solution aqueuse, par rapport à 100 parties en poids de la charge de nitrate d'ammonium.

10. Dispositif selon la revendication 9, **caractérisé en ce que** le dispositif de transport de l'eau d'extinction est réalisé sous forme d'un dispositif de transport à gaz comprimé inerte.

11. Dispositif selon l'une quelconque des revendications 9 ou 10, **caractérisé en ce que** le dispositif de transport à gaz comprimé inerte comprend un dispositif d'alimentation de gaz inerte (23) et des conduites à gaz (22).

12. Dispositif selon l'une quelconque des revendications 9 ou 11, **caractérisé en ce que** l'unité de stockage de gaz inerte (23) comprend un réservoir à gaz liquide (18) et un évaporateur (17), la conduite à gaz (22) partant de l'évaporateur (17) étant raccordée au réservoir à gaz liquide (18).

13. Dispositif selon l'une quelconque des revendications 9 ou 12, **caractérisé en ce que** le réservoir à gaz liquide (18) contient de l'azote liquide.
